# EUROPÄISCHE PATENTSCHRIFT

(11) **EP 3 485 220 B1**
(45) Veröffentlichungstag und Bekanntmachung des Hinweises auf die Patenterteilung: **24.02.2021**
(21) Anmeldenummer: 17730163.7
(22) Anmeldetag: 14.06.2017
(51) Int. Cl.: F41G 1/38, G01D 5/14

(54) **FERNOPTISCHE EINRICHTUNG, INSBESONDERE ZIELFERNROHR**
LONG-RANGE OPTICAL DEVICE, IN PARTICULAR TELESCOPIC SIGHT
DISPOSITIF TÉLÉOPTIQUE, EN PARTICULIER LUNETTE DE VISÉE

(30) Priorität: 13.07.2016 DE 102016112879
(43) Veröffentlichungstag der Anmeldung: 22.05.2019
(73) Patentinhaber: Steiner-Optik GmbH, 95448 Bayreuth (DE)
(72) Erfinder: HOFMANN, Matthias, 95445 Bayreuth (DE); HAAG, Peter, 95444 Bayreuth (DE)
(74) Vertreter: Hafner & Kohl PartmbB
(86) Internationale Anmeldenummer: PCT/EP2017/064635
(87) Internationale Veröffentlichungsnummer: WO 2018/010908

(56) Entgegenhaltungen:
- EP-A1- 2 824 412
- US-A1- 2016 040 959

## Beschreibung

Die Erfindung betrifft eine fernoptische Einrichtung, insbesondere ein Zielfernrohr, umfassend ein verstellbares Absehen und eine zugeordnete Vorrichtung zur Verstellung des Absehens.

Fernoptische Einrichtungen sind etwa in Form von auf einer Schusswaffe montierbaren bzw. montierten Zielfernrohren dem Grunde nach bekannt. Entsprechende fernoptische Einrichtungen umfassen als wesentliche Bestandteile mehrere zwischen einem Objektiv und einem Okular angeordnete optische Elemente durch welche ein optischer Kanal gebildet ist. In dem optischen Kanal befindet sich typischerweise ein Absehen, d. h. eine Zielmarkierung. Das Absehen ist in seiner Position verstellbar und lässt sich damit auf eine gegebene Schusssituation, d. h. insbesondere auf eine gegebene Zielentfernung, und einen damit verbundenen tatsächlichen Treffpunkt einstellen. Typischerweise werden bei der Ein- bzw. Verstellung des Absehens auch ballistische Informationen, z. B. des jeweils verwendeten Projektils, berücksichtigt. Zur Ein- bzw. Verstellung des Absehens ist diesem eine Vorrichtung zur Verstellung des Absehens zugeordnet, deren benutzerseitige Betätigung in einer entsprechenden Verstellung des Absehens resultiert.

Die exakte Erfassung der Position eines Absehens ist für die Treffsicherheit von besonderer Bedeutung. Zur exakten Erfassung der Position eines Absehens sind dem Stand der Technik verschiedene Prinzipien entnehmbar. Diese Prinzipien sind bisweilen komplex aufgebaut und insofern verbesserungswürdig.

US 2016/0040959 A1 offenbart ein Zielfernrohr mit einem Verstellturm.

Der Erfindung liegt die Aufgabe zugrunde, eine demgegenüber verbesserte fernoptische Einrichtung, insbesondere ein Zielfernrohr, umfassend ein verstellbares Absehen und eine zugeordnete Vorrichtung zur Verstellung des Absehens anzugeben.

Die Aufgabe wird durch eine fernoptische Einrichtung gemäß Anspruch 1 gelöst. Die hierzu abhängigen Ansprüche betreffen mögliche Ausführungsformen der fernoptischen Einrichtung.

Bei der hierin beschriebenen fernoptischen Einrichtung ("Einrichtung") handelt es sich z. B. um ein auf einer Schuss- bzw. Feuerwaffe, wie z. B. einem Gewehr, montierbares bzw. zu montierendes Zielfernrohr. Die Einrichtung dient insbesondere der optischen Vergrößerung von durch diese in der Ferne betrachteten Objekten. Hierfür umfasst die Einrichtung mehrere zwischen einem Objektiv und einem Okular angeordnete optische, d. h. insbesondere optisch vergrößernde, Elemente. Die optischen Elemente, bei welchen es sich z. B. um Linsen oder Prismen handeln kann, bilden einen optischen Kanal.

Die Einrichtung umfasst wenigstens ein Absehen, d. h. eine Zielmarkierung. Das Absehen ist in dem durch die optischen Elemente gebildeten optischen Kanal der Einrichtung angeordnet. Das Absehen ist (innerhalb des optischen Kanals) in seiner Position verstellbar und lässt sich damit auf eine gegebene Schusssituation, d. h. insbesondere auf eine gegebene Zielentfernung, und einen damit verbundenen tatsächlichen Treffpunkt einstellen. Unter einer Positionsverstellung des Absehens ist insbesondere eine Verstellung der horizontalen und/oder vertikalen Position des Absehens, insbesondere bezüglich einer horizontalen und/oder vertikalen Position Ausgangs- oder Referenzposition, zu verstehen.

Zur Verstellung der Position des Absehens umfasst die Einrichtung eine dem Absehen zugeordnete Vorrichtung zur Verstellung des Absehens ("Verstellvorrichtung"). Die Verstellvorrichtung umfasst typischerweise wenigstens eine Stelleinrichtung, welche zur Verstellung der Position des Absehens in wenigstens einer, typischerweise vertikalen oder horizontalen, Stellrichtung eingerichtet ist. Die Stelleinrichtung kann als eine Stellmechanik ausgebildet sein oder wenigstens eine solche umfassen.

Im Weiteren werden die wesentlichen Bestandteile der Einrichtung erläutert, welche eine exakte Erfassung der Position des Absehens ermöglichen. Wie sich im Folgenden anhand der Erläuterung der Bestandteile der Einrichtung ergibt, erfolgt die Erfassung der Position des Absehens mittelbar über die Erfassung der Position eines mit dem Absehen bewegungsgekoppelten, von einem Bediener zur Verstellung des Absehens zu betätigenden, drehbar gelagerten Betätigungselements. Bei dem Betätigungselement kann es sich um einen Verstellturm handeln. Selbstverständlich kann die Einrichtung mehrere Betätigungselemente bzw. Verstelltürme umfassen. Dabei kann ein erster Verstellturm der Verstellung der vertikalen Position des Absehens und ein zweiter Verstellturm zur Verstellung der horizontalen Position des Absehens dienen. Das Funktionsprinzip der Erfassung der Position des Absehens ist für sämtliche Verstelltürme identisch.

Zu entsprechenden Bestandteilen der Einrichtung zählen zunächst ein erstes magnetisierbares bzw. magnetisches Magnetelement und ein zweites magnetisierbares bzw. magnetisches Magnetelement. Das erste und/oder das zweite Magnetelement kann bzw. können als bestrombares elektromagnetisches Element (Elektromagnet) oder als permanentmagnetisches Element (Permanentmagnet) ausgebildet sein oder wenigstens ein solches umfassen. Selbstverständlich kann auch eine Gruppe erster Magnetelemente bzw. eine Gruppe zweiter Magnetelemente vorhanden sein.

Das zweite Magnetelement ist unmittelbar oder mittelbar, d. h. unter Zwischenschaltung wenigstens eines Bauteils bzw. einer Bauteilgruppe, mit dem Absehen bewegungsgekoppelt. Das zweite Magnetelement ist zudem relativ zu dem ersten Magnetelement bewegbar gelagert. Die bewegbare Lagerung des zweiten Magnetelements ergibt sich aus der Bewegungskopplung mit dem Absehen. Das erste Magnetelement ist ringartig bzw. -förmig ausgebildet; bei dem ersten Magnetelement handelt es sich sonach typischerweise um einen Ringmagnet. Das zweite Magnetelement ist stabartig bzw. -förmig ausgebildet; bei dem zweiten Magnetelement handelt es sich sonach typischerweise um einen Stabmagnet. Ausgehend von den genannten Geometrien der beiden Magnetelemente ist das stabförmige zweite Magnetelement typischerweise so relativ zu dem ringförmigen ersten Magnetelement ausgerichtet, dass seine Längsachse (axial) mit der durch die ringförmige Geometrie gegebenen (zentralen) Öffnung in dem ersten Magnetelement fluchtet. Dabei sind die Geometrien der beiden Magnetelemente im Weiteren so aufeinander abgestimmt, dass sich das stabförmige zweite Magnetelement (axial) durch die (zentrale) Öffnung des ringförmigen ersten Magnetelements bewegen lässt.

Jedes Magnetelement weist bestimmte magnetische Kenngrößen, d. h. insbesondere ein bestimmtes Magnetfeld, auf. Die jeweiligen magnetischen Kenngrößen sind in Abhängigkeit der Relativposition zwischen dem ersten und dem zweiten Magnetelement veränderlich. In dem ersten und in dem zweiten Magnetelement ist also jeweils eine in Abhängigkeit der Relativposition zwischen dem ersten und dem zweiten Magnetelement veränderliche magnetische Kenngröße, d. h. insbesondere ein veränderliches Magnetfeld, ausbildbar bzw. ausgebildet. Die beiden Magnetelemente stehen sonach miteinander in einer gewissen magnetischen Wechselwirkung. Sofern es sich bei der magnetischen Kenngröße um ein Magnetfeld handelt, zeigt dieses typischerweise einen sinusartigen bzw. -förmigen Verlauf. Durch Bewegungen des zweiten Magnetelements relativ zu dem ersten Magnetelement erfolgende Änderungen der Relativposition zwischen dem ersten und dem zweiten Magnetelement resultieren in, wie sich im Weiteren ergibt, erfassbaren Änderungen jeweiliger magnetischer Kenngrößen, d. h. insbesondere jeweiliger Magnetfelder.

Zu entsprechenden Bestandteilen der Einrichtung zählt weiterhin eine Erfassungseinrichtung. Die hard- und/oder softwaremäßig implementierte Erfassungseinrichtung ist zur Erfassung einer in Abhängigkeit der Relativposition zwischen dem ersten und dem zweiten Magnetelement jeweils erfolgenden Änderung der in dem ersten oder dem zweiten Magnetelement ausbildbaren bzw. ausgebildeten magnetischen Kenngröße, bei welcher es sich, wie erwähnt, insbesondere um ein jeweiliges magnetisches Feld handelt, eingerichtet.

Die Erfassungseinrichtung kann ein dem ersten Magnetelement zuordenbares bzw. zugeordnetes erstes Erfassungselement sowie ein dem zweiten Magnetelement zuordenbares bzw. zugeordnetes zweites Erfassungselement umfassen. Das erste Erfassungselement ist zur Erfassung einer in Abhängigkeit der Relativposition zwischen dem ersten Magnetelement und dem zweiten Magnetelement erfolgenden Änderung der in dem ersten Magnetelement ausbildbaren oder ausgebildeten magnetischen Kenngröße eingerichtet. Das zweite Erfassungselement ist zur Erfassung einer in Abhängigkeit der Relativposition zwischen dem ersten Magnetelement und dem zweiten Magnetelement erfolgenden Änderung der in dem zweiten Magnetelement ausbildbaren oder ausgebildeten magnetischen Kenngröße eingerichtet. Die Zuordnung der jeweiligen Erfassungselemente zu den jeweiligen Magnetelementen ergibt sich typischerweise aus einer (räumlich) benachbarten Anordnung; das erste Erfassungselement ist daher typischerweise benachbart zu dem ersten Magnetelement, das zweite Erfassungselement ist typischerweise benachbart zu dem zweiten Magnetelement angeordnet. Bei den Erfassungselementen kann es sich z. B. um magnetische Sensoren, z. B. in Form von Hall-Sensoren, handeln.

Zu entsprechenden Bestandteilen der Einrichtung zählt weiterhin eine mit der Erfassungseinrichtung kommunizierende Ermittlungseinrichtung. Die hard- und/oder softwaremäßig implementierte Ermittlungseinrichtung ist auf Grundlage einer von der Erfassungseinrichtung erfassten magnetischen Kenngröße des ersten und/oder zweiten Magnetelements bzw. auf Grundlage einer von der Erfassungseinrichtung erfassten Änderung der magnetischen Kenngröße des ersten und/oder zweiten Magnetelements zur Ermittlung einer die Position des Absehens beschreibenden Absehenpositionsinformation eingerichtet. Die Ermittlung der Absehenpositionsinformation erfolgt typischerweise über eine Zuordnung jeweiliger vermittels der Erfassungseinrichtung erfasster magnetischer Kenngrößen des ersten und/oder zweiten Magnetelements bzw. etwaiger Veränderungen der erfassten magnetischen Kenngrößen des ersten und/oder zweiten Magnetelements zu bestimmten Positionen bzw. Positionsveränderungen eines mit dem Absehen bewegungsgekoppelten, von einem Bediener zur Verstellung des Absehens zu betätigenden, drehbar gelagerten Betätigungselements.

Die Ermittlungseinrichtung kann eingerichtet sein, auf Grundlage der von der Erfassungseinrichtung erfassten magnetischen Kenngröße des ersten Magnetelements oder einer Änderung derselben eine Winkelpositionsinformation zu ermitteln und die Winkelpositionsinformation in die Ermittlung der Absehenpositionsinformation einzubeziehen. Die Winkelpositionsinformation beschreibt die auf einen Referenzwert bezogene Winkelposition (in einer Rotationsebene) des mit dem Absehen bewegungsgekoppelten, von einem Bediener zur Verstellung des Absehens zu betätigenden, drehbar gelagerten Betätigungselements. Die erfasste magnetische Kenngröße des ersten Magnetelements bzw. Änderungen derselben werden sonach mit der Winkelposition (in einer Rotationsebene) bzw. der Drehstellung des Betätigungselements verknüpft und zur Ermittlung der Winkelposition bzw. der Drehstellung des Betätigungselements herangezogen. Die erfasste magnetische Kenngröße des ersten Magnetelements lässt sonach für eine gegebene Rotationsebene Rückschlüsse auf die umfangsmäßige Position des Betätigungselements in der Rotationsebene zu. Konkret kann über eine Winkelpositionsinformation z. B. angegeben werden, dass - bezogen auf eine bestimmte Rotationsebene - sich das Betätigungselement nach erfolgter Drehung um z. B. 45° in einer bestimmten Drehrichtung in einer, z. B. um 45° (bezogen auf einen Referenzwert bzw. eine Referenzposition), verdrehten Position befindet.

Weiter kann die Ermittlungseinrichtung eingerichtet sein, auf Grundlage einer von der Erfassungseinrichtung erfassten magnetischen Kenngröße des zweiten Magnetelements oder einer Änderung derselben eine Rotationsebenenpositionsinformation zu ermitteln und die Rotationsebenenpositionsinformation in die Ermittlung der Absehenpositionsinformation einzubeziehen. Die Rotationsebenenpositionsinformation beschreibt eine auf einen Referenzwert bezogene Rotationsebenenposition des mit dem Absehen bewegungsgekoppelten, von einem Bediener zur Verstellung des Absehens zu betätigenden, drehbar gelagerten Betätigungselements. Die erfasste magnetische Kenngröße des zweiten Magnetelements bzw. Änderungen derselben werden sonach mit der Rotationsebene bzw. der Drehebene des Betätigungselements und zur Ermittlung der Rotationsebene bzw. der Drehebene des Betätigungselements herangezogen. Die erfasste magnetische Kenngröße des zweiten Magnetelements lässt sonach für eine gegebene umfangsmäßige Position Rückschlüsse auf die Rotationsebene des Betätigungselements zu. Konkret kann über eine Rotationsebenenpositionsinformation z. B. angegeben werden, dass - bezogen auf eine bestimmte Winkelposition - sich das Betätigungselement z. B. in einer nach einer vollständigen Rotation desselben um eine Rotationsachse (bezogen auf einen Referenzwert bzw. eine Referenzrotationsebene) erreichten zweiten Rotationsebene befindet.

Über eine datenverarbeitungsmäßige Zusammenschau der Winkelpositionsinformation und der Rotationsebenenpositionsinformation lässt sich eine exakte Aussage darüber treffen, in welcher Rotationsebene (vertikale Position) und - innerhalb eben dieser Rotationsebene - in welcher Winkelposition (umfangsmäßige Position) sich das mit dem Absehen bewegungsgekoppelte Betätigungselement befindet. Vermittels der Ermittlungseinrichtung lässt sich aufgrund der gegebenen und bekannten Bewegungskopplung des Betätigungselements mit dem Absehen aus der Position des Betätigungselements auf die Position des Absehens schließen.

Die Einrichtung kann ferner eine mit der Erfassungseinrichtung und/oder der Ermittlungseinrichtung kommunizierende Speichereinrichtung umfassen. In der Speichereinrichtung sind Korrelationsinformationen hinterlegt. Die Korrelationsinformationen beschreiben eine Korrelation bestimmter magnetischer Kenngrößen des ersten Magnetelements mit bestimmten auf einen Referenzwert bezogenen Winkelpositionen des mit dem Absehen bewegungsgekoppelten, von einem Bediener zur Verstellung des Absehens zu betätigenden, drehbar gelagerten Betätigungselements sowie eine Korrelation bestimmter magnetischer Kenngrößen des zweiten Magnetelements mit bestimmten Rotationsebenenpositionen des mit dem Absehen bewegungsgekoppelten, von einem Bediener zur Verstellung des Absehens zu betätigenden, drehbar gelagerten Betätigungselements. Entsprechende Korrelationsinformationen können datenmäßig z. B. nach Art einer Look-Up-Tabelle vorliegen. Durch entsprechende Korrelationsinformationen kann der Rechenaufwand zur Ermittlung der exakten Position des Betätigungselements bzw. des Absehens vereinfacht. Gleichermaßen können entsprechende Korrelationsinformationen zweckmäßig sein, wenn eine gegenseitige (magnetische) Beeinflussung der Magnetelemente, z. B. mangels einer geeigneten (magnetischen) Abschirmung der Magnetelemente, nicht (in gewünschtem Ausmaß) ausgeschlossen werden kann. Die Korrelationsinformationen ermöglichen auch hier eine Korrelation jeweiliger magnetischer Kenngrößen der Magnetelemente mit bestimmten Winkelpositionen bzw. Rotationsebenenpositionen.

Die Einrichtung kann eine Ausgabeeinrichtung umfassen, welche zur akustischen und/oder optischen und/oder haptischen Ausgabe einer ermittelten Absehenpositionsinformation sowie gegebenenfalls weiterer Informationen eingerichtet ist. Eine Ausgabeeinrichtung zur Ausgabe akustischer Informationen kann eine Schallausgabeeinrichtung, eine Ausgabeeinrichtung zur Ausgabe optischer Informationen kann eine Displayeinrichtung, z. B. in Form eines OLED-Displays, eine Ausgabeeinrichtung zur Ausgabe haptischer Informationen kann eine Vibrationseinrichtung umfassen. Für eine Ausgabeeinrichtung zur Ausgabe optischer Informationen gilt, dass diese zweckmäßig in den optischen Kanal der Einrichtung integriert ist. Mithin kann ein Benutzer bei bestimmungsgemäßer Handhabung der Einrichtung, d. h. beim Durchblicken eines optischen Kanals, neben dem tatsächlich optisch betrachteten bzw. vergrößerten Objekt auch die Ausgabeeinrichtung bzw. die über diese optisch ausgegebenen Informationen erkennen.

Nachfolgend werden zweckmäßige Anordnungsmöglichkeiten der beschriebenen Bestandteile der Einrichtung erläutert:
Das zweite Magnetelement kann an oder in einem mit dem Absehen bewegungsgekoppelten Bauelement der Verstellvorrichtung angeordnet oder ausgebildet sein. Bei dem Bauelement handelt es sich typischerweise um eine Komponente der der Verstellvorrichtung zugehörigen Stelleinrichtung bzw. -mechanik zur Verstellung des Absehens.

Die Stelleinrichtung bzw. -mechanik umfasst typischerweise zwei zur Verstellung des Absehens zusammenwirkende Bestandteile.

Einen ersten Bestandteil der Stelleinrichtung kann das mit dem Absehen bewegungsgekoppelte Bauelement bilden. Das Bauelement ist dabei typischerweise als linear bewegbar gelagertes Stellelement ausgebildet. Das Stellelement kann einen schaftartigen, insbesondere mit einem stirnseitigen (freien) Ende, gegen das Absehen bewegbaren Stellabschnitt umfassen. Eine Verstellung des Absehens kann sonach durch eine, gegebenenfalls gegen eine durch ein geeignetes Rückstellelement, z. B. eine Feder, ausgebildete Rückstellkraft erfolgende, Bewegung des Stellabschnitts gegen das Absehen erfolgen. Das zweite Magnetelement kann an oder in dem Stellabschnitt angeordnet oder ausgebildet sein.

Einen zweiten Bestandteil der Stelleinrichtung kann ein mit dem bereits erwähnten, von einem Bediener zur Verstellung des Absehens zu betätigenden, drehbar gelagerten Betätigungselement drehfest verbundenes, drehbar gelagertes Übertragungselement bilden. Das Übertragungselement ist mit dem Stellelement derart gekoppelt, dass Drehbewegungen des Übertragungselements in lineare Bewegungen des Stellelements, insbesondere gegen das Absehen, übersetzbar oder übersetzt sind. Die Kopplung zwischen dem Übertragungselement und dem Stellelement kann durch mechanisches Zusammenwirken übertragungselementseitiger Gewindeelemente und stellelementseitiger Gegengewindeelemente gebildet sein. Bei den übertragungselementseitigen Gewindeelementen handelt es sich typischerweise um, insbesondere im Bereich des Innenumfangs eines hohlzylindrischen Übertragungselementabschnitts ausgebildete, Innengewindeabschnitte. Bei den stellelementseitigen Gegengewindeelementen handelt es sich typischerweise um, insbesondere im Bereich des Außenumfangs eines schaftartigen Stellelementabschnitts ausgebildete, Außengewindeabschnitte.

Das erste Magnetelement kann an oder in einem drehfest gelagerten Abschnitt der Verstellvorrichtung angeordnet oder ausgebildet sein. Insbesondere kann das erste Magnetelement an oder in einem drehfest gelagerten Adapterelement der Verstellvorrichtung angeordnet oder ausgebildet sein. Das Adapterelement ist zur Befestigung der Verstellvorrichtung an einem gehäuseteilseitigen Gegenadapterelement eingerichtet. Die Befestigung erfolgt insbesondere durch eine (lösbare) Schraubverbindung.

An einem ein- oder mehrteilig ausgeführten Gehäuseteil der Einrichtung, an oder in welchem selbstverständlich sämtliche der vorstehend genannten Bestandteile der Einrichtung angeordnet oder ausgebildet sein können, kann wenigstens eine Anschlusseinrichtung angeordnet oder ausgebildet sein, über welche wenigstens eine mit der Einrichtung koppelbare, insbesondere elektronische, Funktionskomponente an die Einrichtung anschließbar ist. Die Einrichtung kann sonach, insbesondere bedarfsgerecht, mit unterschiedlichen externen Funktionskomponenten, wie z. B. einer Zielentfernungsmesseinrichtung ("Range Finder"), gekoppelt werden. Die Anschlusseinrichtung kann eine geeignete Kommunikationsschnittstelle umfassen, welche zur, insbesondere bidirektionalen, Übertragung (Senden und/oder Empfangen) von Daten zwischen der Einrichtung und einer Funktionskomponente eingerichtet ist.

Unabhängig von einer entsprechenden anschlusseinrichtungsseitigen Kommunikationsschnittstelle, kann die Einrichtung ferner eine Kommunikationseinrichtung umfassen. Die Kommunikationseinrichtung ist zur, insbesondere drahtlosen bzw. funkbasierten, gegebenenfalls datenmäßig verschlüsselten, bidirektionalen Übertragung von Daten, z. B. einer ermittelten Absehenpositionsinformation, an wenigstens einen externen Kommunikationspartner eingerichtet. Die Kommunikationseinrichtung ist hierfür mit hard-und/oder softwaremäßig geeigneten, insbesondere funkbasierten, bidirektionalen Datenübertragungsprotokollen ausgestattet, welche z. B. eine Bluetooth- oder WLAN-Kommunikation ermöglichen. Die Kommunikationseinrichtung kann zur Ausbildung einer funkbasierten Bluetooth- oder WLAN-Verbindung eingerichtet sein. Bei einem externen Kommunikationspartner kann es sich z. B. um eine weitere Einrichtung, ein Handy, ein Smartphone, einen Tablet-PC, Notebook oder um ein lokales oder globales Datennetzwerk, wie ein Intranet oder das Internet, handeln.

Selbstverständlich kann auch die Kommunikationseinrichtung an oder in dem Gehäuseteil der Einrichtung angeordnet oder ausgebildet sein. Gleichermaßen ist es jedoch möglich, dass die oder eine, gegebenenfalls weitere, Kommunikationseinrichtung in einem zu dem Gehäuseteil der Einrichtung gesonderten Gehäuseteil angeordnet oder ausgebildet ist. In diesem Fall ist an dem Gehäuseteil der Einrichtung eine entsprechende Anschlusseinrichtung angeordnet oder ausgebildet, über welche die oder eine, gegebenenfalls weitere, Kommunikationseinrichtung an die Einrichtung anschließbar ist. Das weiter oben beschriebene Prinzip einer Anschlusseinrichtung ermöglicht sonach auch das bedarfsweise Anschließen einer externen Kommunikationseinrichtung an die Einrichtung.

Die Erfindung ist anhand von Ausführungsbeispielen in den Zeichnungsfiguren näher erläutert. Dabei zeigen:

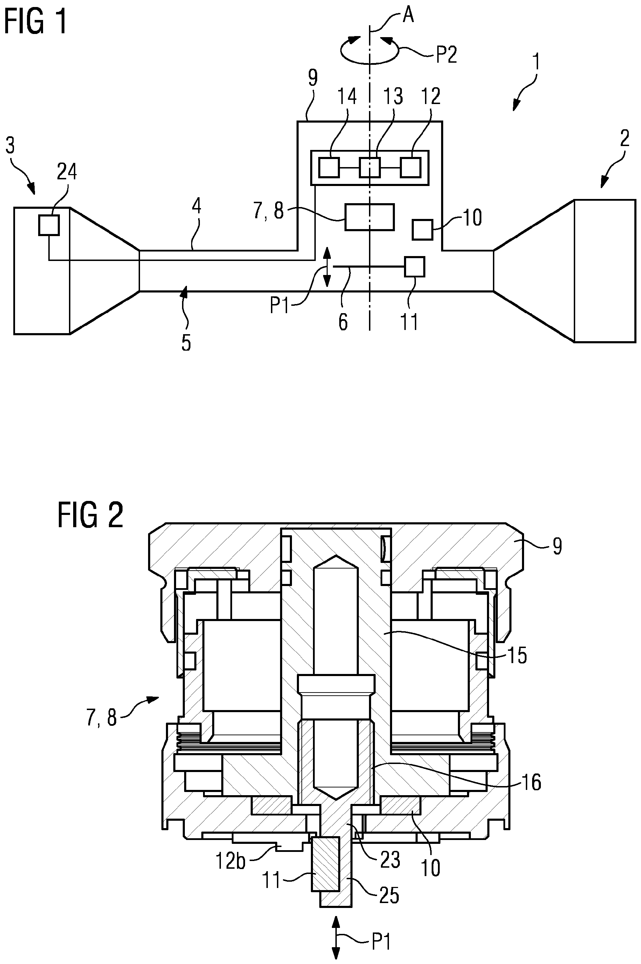

- Fig. 1-4: jeweils eine Prinzipdarstellung einer fernoptischen Einrichtung gemäß einem Ausführungsbeispiel.

Fig. 1 zeigt eine Prinzipdarstellung einer fernoptischen Einrichtung 1 ("Einrichtung") gemäß einem Ausführungsbeispiel. Die Einrichtung 1 ist in Fig. 1 einer schematischen Seitenansicht gezeigt.

Die Einrichtung 1 ist ein auf einer Schuss- bzw. Feuerwaffe (nicht gezeigt), d. h. z. B. einem Gewehr, montierbares bzw. zu montierendes Zielfernrohr, welches der optischen Vergrößerung von durch diese in der Ferne betrachteten Objekten bzw. Zielen dient. Hierfür umfasst die Einrichtung 1 mehrere zwischen einem Objektiv 2 und einem Okular 3 angeordnete optische, d. h. insbesondere optisch vergrößernde, Elemente (nicht näher gezeigt). Die optischen Elemente, bei welchen es sich z. B. um Linsen und/oder Prismen handelt, bilden einen sich durch ein längliches, ein- oder mehrteiliges Gehäuseteil 4 zwischen dem Objektiv 2 und dem Okular 3 erstreckenden optischen Kanal 5.

Die Einrichtung 1 umfasst ein Absehen 6, d. h. eine Zielmarkierung. Das Absehen 6 ist in dem durch die optischen Elemente gebildeten optischen Kanal 5 angeordnet. Das Absehen 6 ist (innerhalb des optischen Kanals 5) in seiner Position verstellbar und lässt sich damit auf eine gegebene Schusssituation, d. h. insbesondere auf eine gegebene Zielentfernung, und einen damit verbundenen tatsächlichen Treffpunkt einstellen. Unter einer Positionsverstellung des Absehens 6 ist eine Verstellung der horizontalen und/oder vertikalen (vgl. den vertikal ausgerichteten Doppelpfeil P1) Position des Absehens 6, insbesondere bezüglich einer horizontalen und/oder vertikalen Position Ausgangs- oder Referenzposition, zu verstehen.

Zur Verstellung der Position des Absehens 6 umfasst die Einrichtung 1 eine dem Absehen 6 zugeordnete Verstellvorrichtung 7. Die Verstellvorrichtung 7 umfasst eine Stelleinrichtung 8, welche zur Verstellung der Position des Absehens in einer horizontalen bzw. einer vertikalen Stellrichtung eingerichtet ist. Wie sich im Weiteren ergibt, ist die Stelleinrichtung 8 als eine Stellmechanik ausgebildet.

Die Einrichtung 1 ist über die im Weiteren erläuterten Bestandteile zu einer exakten Erfassung der Position des Absehens 6 eingerichtet. Die Erfassung der Position des Absehens 6 erfolgt mittelbar über die Erfassung der Position eines mit dem Absehen 6 bewegungsgekoppelten, von einem Bediener zur Verstellung des Absehens 6 zu betätigenden, d. h. zu drehenden, wie durch den Doppelpfeil P2 angedeutet, um, die Dreh- bzw. Rotationsachse A drehbar gelagerten Betätigungselements 9. Bei dem Betätigungselement 9 handelt es sich um einen Verstellturm. Der in Fig. 1 dargestellte Verstellturm dient der Verstellung der vertikalen Position des Absehens 6. Selbstverständlich kann die Einrichtung 1 einen weiteren Verstellturm zur Verstellung der horizontalen Position des Absehens 6 umfassen. Das Funktionsprinzip der Erfassung der Position des Absehens 6 ist für alle Betätigungselemente 9 bzw. Verstelltürme identisch.

Entsprechende Bestandteile der Einrichtung 1 zur exakten Positionserfassung des Absehens 6 sind ein erstes magnetisierbares bzw. magnetisches Magnetelement 10 und ein zweites magnetisierbares bzw. magnetisches Magnetelement 11. Die Magnetelemente 10, 11 sind als permanentmagnetische Elemente (Permanentmagnet) ausgebildet. denkbar wäre es gleichwohl, dass wenigstens ein Magnetelement 10, 11 als bestrombares elektromagnetisches Element (Elektromagnet) ausgebildet ist.

Das zweite Magnetelement 11 ist unmittelbar oder mittelbar, d. h. unter Zwischenschaltung wenigstens eines Bauteils bzw. einer Bauteilgruppe, mit dem Absehen 6 bewegungsgekoppelt. Das zweite Magnetelement 11 ist zudem relativ zu dem ortsfesten ersten Magnetelement 10 bewegbar gelagert. Die bewegbare Lagerung des zweiten Magnetelements 11 ergibt sich aus der Bewegungskopplung mit dem Absehen 6.

Die beiden Magnetelemente 10, 11 weisen jeweils bestimmte magnetische Kenngrößen, d. h. insbesondere ein bestimmtes Magnetfeld, auf und stehen miteinander in einer gewissen magnetischen Wechselwirkung. Die jeweiligen magnetischen Kenngrößen sind in Abhängigkeit der Relativposition zwischen dem ersten und dem zweiten Magnetelement 10, 11 veränderlich. In dem ersten und in dem zweiten Magnetelement 10, 11 ist also jeweils eine in Abhängigkeit der Relativposition zwischen dem ersten und dem zweiten Magnetelement 10, 11 veränderliche magnetische Kenngröße, d. h. insbesondere ein veränderliches Magnetfeld, ausbildbar bzw. ausgebildet. Sofern es sich bei der magnetischen Kenngröße um ein Magnetfeld handelt, zeigt dieses typischerweise einen sinusartigen bzw. -förmigen Verlauf. Durch Bewegungen des zweiten Magnetelements relativ zu dem ersten Magnetelement erfolgende Änderungen der Relativposition zwischen dem ersten und dem zweiten Magnetelement resultieren in, wie sich im Weiteren ergibt, erfassbaren Änderungen jeweiliger magnetischer Kenngrößen, d. h. insbesondere jeweiliger Magnetfelder.

Die Einrichtung 1 weist ferner eine den Magnetelementen 10, 11 zugeordnete Erfassungseinrichtung 12 auf. Die hard- und/oder softwaremäßig implementierte Erfassungseinrichtung 12 ist zur Erfassung einer in Abhängigkeit der Relativposition zwischen dem ersten und dem zweiten Magnetelement 10, 11 jeweils erfolgenden Änderung der in dem ersten oder dem zweiten Magnetelement 10, 11 ausbildbaren bzw. ausgebildeten magnetischen Kenngröße, insbesondere des jeweiligen magnetischen Felds, eingerichtet.

Weiterhin weist die Einrichtung 1 eine mit der Erfassungseinrichtung 12 kommunizierende Ermittlungseinrichtung 13. Die hard- und/oder softwaremäßig implementierte Ermittlungseinrichtung 13 ist auf Grundlage einer von der Erfassungseinrichtung 12 erfassten magnetischen Kenngröße des ersten und/oder zweiten Magnetelements 10, 11 bzw. auf Grundlage einer von der Erfassungseinrichtung 12 erfassten Änderung der magnetischen Kenngröße des ersten und/oder zweiten Magnetelements 10, 11 zur Ermittlung einer die Position des Absehens 6 beschreibenden Absehenpositionsinformation eingerichtet. Die Ermittlung der Absehenpositionsinformation erfolgt über eine Zuordnung jeweiliger vermittels der Erfassungseinrichtung 12 erfasster magnetischer Kenngrößen des ersten und/oder zweiten Magnetelements 10, 11 bzw. etwaiger Veränderungen der erfassten magnetischen Kenngrößen des ersten und/oder zweiten Magnetelements 10, 11 zu bestimmten Positionen bzw. Positionsveränderungen des mit dem Absehen 6 bewegungsgekoppelten Betätigungselements 9.

Die Ermittlungseinrichtung 13 ist eingerichtet, auf Grundlage der von der Erfassungseinrichtung 12 erfassten magnetischen Kenngröße des ersten Magnetelements 10 oder einer Änderung derselben eine Winkelpositionsinformation zu ermitteln und die Winkelpositionsinformation in die Ermittlung der Absehenpositionsinformation einzubeziehen. Die Winkelpositionsinformation beschreibt die auf einen Referenzwert bezogene Winkelposition (in einer Rotationsebene) des mit dem Absehen 6 bewegungsgekoppelten Betätigungselements 9. Die erfasste magnetische Kenngröße des ersten Magnetelements 10 bzw. Änderungen derselben werden sonach mit der Winkelposition (in einer Rotationsebene) bzw. der Drehstellung des Betätigungselements 9 verknüpft und zur Ermittlung der Winkelposition bzw. der Drehstellung des Betätigungselements 9 herangezogen. Die erfasste magnetische Kenngröße des ersten Magnetelements 9 lässt sonach für eine gegebene Rotationsebene Rückschlüsse auf die umfangsmäßige Position des Betätigungselements 9 in der Rotationsebene zu. Über eine Winkelpositionsinformation kann also z. B. angegeben werden, dass - bezogen auf eine bestimmte Rotationsebene - sich das Betätigungselement 9 nach erfolgter Drehung um z. B. 45° in einer bestimmten Drehrichtung in einer, z. B. um 45° (bezogen auf einen Referenzwert bzw. eine Referenzposition), verdrehten Position befindet.

Die Ermittlungseinrichtung 13 ist weiter eingerichtet, auf Grundlage einer von der Erfassungseinrichtung 12 erfassten magnetischen Kenngröße des zweiten Magnetelements 11 oder einer Änderung derselben eine Rotationsebenenpositionsinformation zu ermitteln und die Rotationsebenenpositionsinformation in die Ermittlung der Absehenpositionsinformation einzubeziehen. Die Rotationsebenenpositionsinformation beschreibt eine auf einen Referenzwert bezogene Rotationsebenenposition des mit dem Absehen 6 bewegungsgekoppelten Betätigungselements 9. Die erfasste magnetische Kenngröße des zweiten Magnetelements 11 bzw. Änderungen derselben werden sonach mit der Rotationsebene bzw. der Drehebene des Betätigungselements 9 und zur Ermittlung der Rotationsebene bzw. der Drehebene des Betätigungselements 9 herangezogen. Die erfasste magnetische Kenngröße des zweiten Magnetelements 11 lässt sonach für eine gegebene umfangsmäßige Position Rückschlüsse auf die Rotationsebene des Betätigungselements 9 zu. Über eine Rotationsebenenpositionsinformation kann also z. B. angegeben werden, dass - bezogen auf eine bestimmte Winkelposition - sich das Betätigungselement 9 z. B. in einer nach einer vollständigen Rotation desselben um die Rotationsachse A (bezogen auf einen Referenzwert bzw. eine Referenzrotationsebene) erreichten zweiten Rotationsebene befindet.

Über eine datenverarbeitungsmäßige Zusammenschau der Winkelpositionsinformation und der Rotationsebenenpositionsinformation lässt sich eine exakte Aussage darüber treffen, in welcher Rotationsebene (vertikale Position) und - innerhalb eben dieser Rotationsebene - in welcher Winkelposition (umfangsmäßige Position) sich das Betätigungselement 9 befindet. Vermittels der Ermittlungseinrichtung 13 lässt sich aufgrund der gegebenen und bekannten Bewegungskopplung des Betätigungselements 9 mit dem Absehen 6 aus der Position des Betätigungselements 9 auf die Position des Absehens 6 schließen.

Die Einrichtung 1 umfasst typischerweise, d. h. nicht zwingend, eine mit der Erfassungseinrichtung 12 und der Ermittlungseinrichtung 13 kommunizierende Speichereinrichtung 14. In der Speichereinrichtung 14 sind Korrelationsinformationen hinterlegt. Die Korrelationsinformationen beschreiben eine Korrelation bestimmter magnetischer Kenngrößen des ersten Magnetelements 10 mit bestimmten auf einen Referenzwert bezogenen Winkelpositionen des Betätigungselements 9 sowie eine Korrelation bestimmter magnetischer Kenngrößen des zweiten Magnetelements 11 mit bestimmten Rotationsebenenpositionen des Betätigungselements 9. Die Korrelationsinformationen können datenmäßig z. B. nach Art einer Look-Up-Tabelle vorliegen.

Anhand des nicht weiter bezeichneten, die Erfassungseinrichtung 12, die Ermittlungseinrichtung 13 und die Speichereinrichtung 14 umgebenden Kastens ist angedeutet, dass die Erfassungseinrichtung 12, die Ermittlungseinrichtung 13 und die Speichereinrichtung 14 Teile einer einrichtungsseitigen (zentralen) Steuereinrichtung bilden können.

Weiterhin umfasst die Einrichtung 1 eine Ausgabeeinrichtung 25, welche zur akustischen und/oder optischen und/oder haptischen Ausgabe einer ermittelten Absehenpositionsinformation sowie gegebenenfalls weiterer Informationen eingerichtet ist. In dem in Fig. 1 gezeigten Ausführungsbeispiel ist die Ausgabeeinrichtung 25 als Displayeinrichtung ausgebildet, d. h. zur Ausgabe optischer Informationen eingerichtet. Die Ausgabe- bzw. Displayeinrichtung ist, z. B. in Form eines OLED-Displays, zweckmäßig in den optischen Kanal 5 der Einrichtung 1 integriert. Mithin kann ein Benutzer bei bestimmungsgemäßer Handhabung der Einrichtung 1, d. h. beim Durchblicken des optischen Kanals 5, neben dem tatsächlich optisch betrachteten bzw. vergrößerten Objekt auch die bzw. die über die Ausgabeeinrichtung 25 optisch ausgegebenen Informationen erkennen.

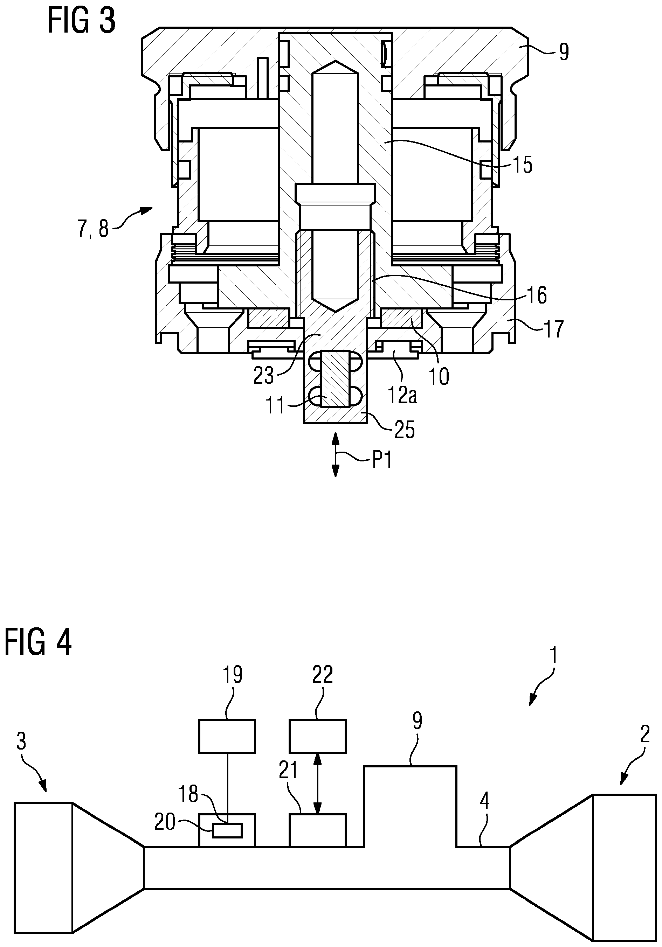

Die Fig. 2, 3 zeigen Prinzipdarstellungen eines weiteren Ausführungsbeispiels der Einrichtung 1 ausschnittsweise im Bereich des Betätigungselements 9. Die Einrichtung 1 ist in den Fig. 2, 3 jeweils in geschnittenen Ansichten gezeigt; bei Fig. 2 handelt es sich um einen Längs- und bei Fig. 3 um einen (um 90° im Verhältnis zu Fig. 2 gedrehten) Querschnitt durch die Einrichtung 1 im Bereich des Betätigungselements 9. Im Weiteren werden nur die zur Erläuterung des erfindungsgemäßen Prinzips relevanten Bestandteile der Einrichtung 1 näher bezeichnet.

Anhand der Fig. 2, 3 ist zunächst ersichtlich, dass das erste Magnetelement 10 ringartig bzw. -förmig und das zweite Magnetelement 11 stabartig bzw. -förmig ausgebildet ist; in dem in den Fig. 2, 3 gezeigten Ausführungsbeispiel handelt es sich bei dem ersten Magnetelement 10 sonach um einen Ringmagnet und bei dem zweiten Magnetelement 11 um einen Stabmagnet. Das stabförmige zweite Magnetelement 11 ist so relativ zu dem ringförmigen ersten Magnetelement 10 ausgerichtet, dass seine Längsachse (axial) mit der durch die ringförmige Geometrie gegebenen (zentralen) Öffnung (nicht bezeichnet) in dem ersten Magnetelement 10 fluchtet. Die Geometrien der beiden Magnetelemente 10, 11 sind im Weiteren so aufeinander abgestimmt, dass sich das stabförmige zweite Magnetelement 11 (axial) durch die (zentrale) Öffnung des ringförmigen ersten Magnetelements 10 bewegen lässt.

Anhand der Fig. 2, 3 ist weiter ersichtlich, dass die Erfassungseinrichtung 12 ein dem ersten Magnetelement 10 zugeordnetes erstes Erfassungselement 12a sowie ein dem zweiten Magnetelement 11 zugeordnetes zweites Erfassungselement 12b umfassen kann. Bei den Erfassungselementen 12a, 12b handelt es sich um magnetische Sensoren, z. B. in Form von Hall-Sensoren. Das erste Erfassungselement 12a ist zur Erfassung der in Abhängigkeit der Relativposition zwischen dem ersten und dem zweiten Magnetelement 10, 11 erfolgenden Änderung der in dem ersten Magnetelement 10 ausgebildeten magnetischen Kenngröße eingerichtet. Das zweite Erfassungselement 12b ist zur Erfassung der in Abhängigkeit der Relativposition zwischen dem ersten und dem zweiten Magnetelement 10, 11 erfolgenden Änderung der in dem zweiten Magnetelement 11 ausgebildeten magnetischen Kenngröße eingerichtet. Die Zuordnung der jeweiligen Erfassungselemente 12a, 12b zu den jeweiligen Magnetelementen 10, 11 ergibt sich aus der (räumlich) benachbarten Anordnung; das erste Erfassungselement 12a ist benachbart zu dem ersten Magnetelement 10 (vgl. Fig. 3), das zweite Erfassungselement 12b ist benachbart zu dem zweiten Magnetelement 11 (vgl. Fig. 2) angeordnet.

Anhand der Fig. 2, 3 sind weiter beispielhafte Anordnungsmöglichkeiten der Magnetelemente 10, 11 sowie ein konstruktiver Aufbau der Verstellvorrichtung 7 bzw. der Stelleinrichtung 8 erkennbar.

Das zweite Magnetelement 11 ist an einem mit dem Absehen 6 bewegungsgekoppelten Bauelement der Verstellvorrichtung 7 angeordnet. Bei dem Bauelement handelt es sich um eine Komponente der der Verstellvorrichtung 7 zugehörigen Stelleinrichtung 8 zur Verstellung des Absehens 6. Das Bauelement ist als linear bewegbar gelagertes Stellelement 23 ausgebildet. Das Stellelement 23 umfasst einen schaftartigen, mit einem stirnseitigen (freien) Ende gegen das Absehen 6 bewegbaren Stellabschnitt 25. Ersichtlich ist das zweite Magnetelement 11 im Bereich des Stellabschnitts 25 angeordnet.

Die Stelleinrichtung 8 umfasst zwei zur Verstellung des Absehens 6 zusammenwirkende Bestandteile. Einen ersten Bestandteil der Stelleinrichtung 8 bildet das mit dem Absehen 6 bewegungsgekoppelte Stellelement 23. Eine Verstellung des Absehens 6 erfolgt sonach durch eine, gegebenenfalls gegen eine durch ein geeignetes Rückstellelement (nicht gezeigt), z. B. eine Feder, ausgebildete Rückstellkraft erfolgende, Bewegung des Stellabschnitts 25 gegen das Absehen 6. Einen zweiten Bestandteil der Stelleinrichtung 8 bildet ein mit dem Betätigungselement 9 drehfest verbundenes, drehbar gelagertes Übertragungselement 15 bilden. Das Übertragungselement 15 ist mit dem Stellelement 23 derart gekoppelt, dass Drehbewegungen des Übertragungselements 15 in lineare Bewegungen (vgl. Doppelpfeil P1) des Stellelements 23, insbesondere gegen das Absehen 6, übersetzbar bzw. übersetzt sind. Die Kopplung zwischen dem Übertragungselement 15 und dem Stellelement 23 ist durch mechanisches Zusammenwirken (Gewindeeingriff) übertragungselementseitiger Gewindeelemente (nicht näher bezeichnet) und stellelementseitiger Gegengewindeelemente (nicht näher bezeichnet) gebildet. Bei den übertragungselementseitigen Gewindeelementen handelt es sich um im Bereich des Innenumfangs eines hohlzylindrischen Übertragungselementabschnitts 16 ausgebildete Innengewindeabschnitte. Bei den stellelementseitigen Gegengewindeelementen handelt es sich um im Bereich des Außenumfangs des schaftartigen Stellelementabschnitts ausgebildete Außengewindeabschnitte.

Anhand der Fig. 2, 3 ist weiter ersichtlich, dass das erste Magnetelement 10 an oder in einem drehfest gelagerten Abschnitt der Verstellvorrichtung 7 angeordnet sein kann. Das erste Magnetelement 10 ist hier in einem drehfest gelagerten Adapterelement 17 der Verstellvorrichtung 7 angeordnet. Das Adapterelement 17 dient zur Befestigung der Verstellvorrichtung 7 an einem gehäuseteilseitigen Gegenadapterelement (nicht näher bezeichnet). Die Befestigung erfolgt insbesondere durch eine (lösbare) Schraubverbindung.

Fig. 4 zeigt eine Prinzipdarstellung eines weiteren Ausführungsbeispiels der Einrichtung 1. Die Einrichtung 1 ist in Fig. 4 in einer schematischen Seitenansicht analog Fig. 1 gezeigt.

In Ergänzung zu den im Zusammenhang mit dem Ausführungsbeispiel gemäß Fig. 1 erläuterten Bestandteilen der Einrichtung 1 ist an dem Gehäuseteil 5 der Einrichtung 1 eine Anschlusseinrichtung 18 angeordnet bzw. ausgebildet, über welche eine oder mehrere mit der Einrichtung 1 koppelbare, insbesondere elektronische, Funktionskomponente(n) 19 an die Einrichtung 1 anschließbar ist bzw. sind. Die Einrichtung 1 kann daher bedarfsgerecht mit unterschiedlichen externen Funktionskomponenten 19, wie z. B. einer Zielentfernungsmesseinrichtung ("Range Finder"), gekoppelt werden. Die Anschlusseinrichtung umfasst eine Kommunikationsschnittstelle 20, welche zur Übertragung (Senden und/oder Empfangen) von Daten zwischen der Einrichtung 1 und der Funktionskomponente 19 eingerichtet ist.

Alternativ oder ergänzend zu der Anschlusseinrichtung 18 umfasst die Einrichtung 1 eine Kommunikationseinrichtung 21. Die Kommunikationseinrichtung 21 ist ebenso an dem Gehäuseteil 5 angeordnet. Die Kommunikationseinrichtung 21 ist zur drahtlosen bzw. funkbasierten, gegebenenfalls datenmäßig verschlüsselten, bidirektionalen Übertragung von Daten, z. B. einer ermittelten Absehenpositionsinformation, an wenigstens einen externen Kommunikationspartner 22 eingerichtet. Bei einem externen Kommunikationspartner 22 kann es sich z. B. um eine weitere Einrichtung, ein Handy, ein Smartphone, einen Tablet-PC, Notebook oder um ein lokales oder globales Datennetzwerk, wie ein Intranet oder das Internet, handeln. Die Kommunikationseinrichtung 21 ist hierfür mit hard- und/oder softwaremäßig geeigneten, funkbasierten Datenübertragungsprotokollen ausgestattet, welche z. B. eine Bluetooth- oder WLAN-Kommunikation ermöglichen.

Alternativ zu der Anordnung der Kommunikationseinrichtung 21 an dem Gehäuseteil 5, ist es jedoch möglich, dass die oder eine, gegebenenfalls weitere, Kommunikationseinrichtung 21 in einem zu dem Gehäuseteil 5 gesonderten Gehäuseteil (nicht gezeigt) angeordnet oder ausgebildet ist. In diesem Fall ist die Kommunikationseinrichtung 21 über die Anschlusseinrichtung 18 an das Gehäuseteil 5 bzw. an die relevanten elektronischen Bestandteile der Einrichtung 1, d. h. z. B. die Erfassungseinrichtung 12 und die Ermittlungseinrichtung 13, anschließbar.

Für alle Ausführungsbeispiele gilt, dass die elektrische Versorgung der elektronischen Bestandteile der Einrichtung 1 typischerweise über einen einrichtungsseitigen (wiederaufladbaren) elektrischen Energiespeicher (nicht gezeigt), d. h. eine Batterie, mit elektrischer Energie versorgt sind.

Einzelne, mehrere oder sämtliche Merkmale der in den jeweiligen Fig. gezeigten Ausführungsbeispiele können beliebig mit- bzw. untereinander kombiniert werden.

## Patentansprüche

1. Fernoptische Einrichtung (1), insbesondere Zielfernrohr, umfassend ein in seiner Position verstellbares Absehen (6) und eine zugeordnete Vorrichtung (7) zur Verstellung des Absehens (6), **gekennzeichnet durch**
- ein ringartig oder ringförmig ausgebildetes erstes Magnetelement (10), insbesondere in Form eines Ringmagnets,
- ein mit dem Absehen (6) bewegungsgekoppeltes, stabartig oder stabförmig ausgebildetes zweites Magnetelement (11), insbesondere in Form eines Stabmagnets, wobei das zweite Magnetelement (11) relativ zu dem ersten Magnetelement (10) bewegbar gelagert ist, wobei
in dem ersten und in dem zweiten Magnetelement (10, 11) jeweils eine in Abhängigkeit der Relativposition zwischen dem ersten und dem zweiten Magnetelement (10, 11) veränderliche magnetische Kenngröße, insbesondere ein veränderliches Magnetfeld, ausbildbar oder ausgebildet ist,
- eine Erfassungseinrichtung (12), welche zur Erfassung einer in Abhängigkeit der Relativposition zwischen dem ersten und dem zweiten Magnetelement (10, 11) jeweils erfolgenden Änderung der in dem ersten oder zweiten Magnetelement (10, 11) ausbildbaren oder ausgebildeten magnetischen Kenngröße eingerichtet ist,
- eine Ermittlungseinrichtung (13), welche auf Grundlage einer von der Erfassungseinrichtung (12) erfassten magnetischen Kenngröße des ersten und/oder zweiten Magnetelements (10, 11) oder auf Grundlage einer von der Erfassungseinrichtung (12) erfassten Änderung der magnetischen Kenngröße des ersten und/oder zweiten Magnetelements (10, 11) zur Ermittlung einer die Position des Absehens (6) beschreibenden Absehenpositionsinformation eingerichtet ist.

2. Fernoptische Einrichtung nach Anspruch 1, **dadurch gekennzeichnet, dass** die Erfassungseinrichtung (12) ein dem ersten Magnetelement (10) zuordenbares oder zugeordnetes erstes Erfassungselement (12a) sowie ein dem zweiten Magnetelement (11) zuordenbares oder zugeordnetes zweites Erfassungselement (12b) umfasst, wobei
das erste Erfassungselement (12a) zur Erfassung einer in Abhängigkeit der Relativposition zwischen dem ersten Magnetelement (10) und dem zweiten Magnetelement (11) erfolgenden Änderung der in dem ersten Magnetelement (10) ausbildbaren oder ausgebildeten magnetischen Kenngröße eingerichtet ist, und
das zweite Erfassungselement (12b) zur Erfassung einer in Abhängigkeit der Relativposition zwischen dem ersten Magnetelement (10) und dem zweiten Magnetelement (11) erfolgenden Änderung der in dem zweiten Magnetelement (11) ausbildbaren oder ausgebildeten magnetischen Kenngröße eingerichtet ist.

3. Fernoptische Einrichtung nach Anspruch 1 oder 2, **dadurch gekennzeichnet, dass** die Ermittlungseinrichtung (13) eingerichtet ist, auf Grundlage der von der Erfassungseinrichtung (12) erfassten magnetischen Kenngröße des ersten Magnetelements (10) oder einer Änderung derselben eine Winkelpositionsinformation, welche die auf einen Referenzwert bezogene Winkelposition eines mit dem Absehen (6) bewegungsgekoppelten, von einem Bediener zur Verstellung des Absehens (6) zu betätigenden, drehbar gelagerten Betätigungselements (9) beschreibt, zu ermitteln und die Winkelpositionsinformation in die Ermittlung der Absehenpositionsinformation einzubeziehen.

4. Fernoptische Einrichtung nach einem der vorhergehenden Ansprüche, **dadurch gekennzeichnet, dass** das zweite Magnetelement (11) an oder in einem mit dem Absehen (6) bewegungsgekoppelten, bewegbar gelagerten Bauelement der Vorrichtung (7) angeordnet oder ausgebildet ist.

5. Fernoptische Einrichtung nach Anspruch 4, **dadurch gekennzeichnet, dass** das Bauelement ein einen ersten Bestandteil einer zur Verstellung des Absehens (6) eingerichteten vorrichtungsseitigen Stelleinrichtung (8) bildendes, linear bewegbar gelagertes Stellelement (23) ist.

6. Fernoptische Einrichtung nach Anspruch 5, **dadurch gekennzeichnet, dass** das Stellelement (23) einen schaftartigen, gegen das Absehen (6) bewegbaren Stellabschnitt (25) umfasst, wobei das zweite Magnetelement (11) an oder in dem Stellabschnitt (25) angeordnet oder ausgebildet ist.

7. Fernoptische Einrichtung nach Anspruch 5 oder 6, **gekennzeichnet durch** ein von einem Bediener zur Verstellung des Absehens (6) zu betätigendes, drehbar gelagertes Betätigungselement (9) und ein drehfest mit dem Betätigungselement (9) verbundenes, einen zweiten Bestandteil der vorrichtungsseitigen Stelleinrichtung (8) bildendes, drehbar gelagertes Übertragungselement (15), wobei das Übertragungselement (15) mit dem Stellelement (23) derart gekoppelt ist, dass Drehbewegungen des Übertragungselements (15) in lineare Bewegungen des Stellelements (23), insbesondere gegen das Absehen (6), übersetzbar oder übersetzt sind.

8. Fernoptische Einrichtung nach einem der vorhergehenden Ansprüche, **dadurch gekennzeichnet, dass** das erste Magnetelement (10) an oder in einem drehfest gelagerten Adapterelement (17) der fernoptischen Einrichtung (1), welches zur Befestigung der Vorrichtung (7) an einem Gegenadapterelement eines Gehäuseteils (5) der Einrichtung (1) eingerichtet ist, angeordnet oder ausgebildet ist.

9. Fernoptische Einrichtung nach einem der vorhergehenden Ansprüche, **gekennzeichnet durch** eine Ausgabeeinrichtung (24), welche zur akustischen und/oder optischen und/oder haptischen Ausgabe einer ermittelten Absehenpositionsinformation sowie gegebenenfalls weiterer Informationen eingerichtet ist.

10. Fernoptische Einrichtung nach einem der vorhergehenden Ansprüche, **dadurch gekennzeichnet, dass** an einem Gehäuseteil (5) der fernoptischen Einrichtung (1) wenigstens eine Anschlusseinrichtung (18) angeordnet oder ausgebildet ist, über welche wenigstens eine mit der fernoptischen Einrichtung (1) koppelbare, insbesondere elektronische, Funktionskomponente (19), insbesondere eine Zielentfernungsmesseinrichtung, an die fernoptische Einrichtung (1) anschließbar ist.

11. Fernoptische Einrichtung nach einem der vorhergehenden Ansprüche, **gekennzeichnet durch** eine Kommunikationseinrichtung (21), welche zur, insbesondere funkbasierten, bidirektionalen Übertragung von Daten, insbesondere einer ermittelten Absehenpositionsinformation, an wenigstens einen externen Kommunikationspartner (22) eingerichtet ist, wobei die Kommunikationseinrichtung (21) insbesondere in dem oder einem Gehäuseteil (5) der fernoptischen Einrichtung (1) angeordnet oder ausgebildet ist.

12. Fernoptische Einrichtung nach Anspruch 11, **dadurch gekennzeichnet, dass** die Kommunikationseinrichtung (21) insbesondere in dem oder einem Gehäuseteil (5) der fernoptischen Einrichtung (1) angeordnet oder ausgebildet ist, wobei die oder eine, gegebenenfalls weitere, Kommunikationseinrichtung (21) in einem zu dem oder einem Gehäuseteil (5) der fernoptischen Einrichtung (1) gesonderten Gehäuseteil angeordnet oder ausgebildet ist, wobei an dem Gehäuseteil (5) der fernoptischen Einrichtung (1) wenigstens eine Anschlusseinrichtung (21) angeordnet oder ausgebildet ist, über welche die oder eine, gegebenenfalls weitere, Kommunikationseinrichtung (21), insbesondere datenkommunikationsmäßig, an die fernoptische Einrichtung (1) anschließbar ist.

13. Fernoptische Einrichtung nach einem der Ansprüche 11 bis 12, **dadurch gekennzeichnet, dass** die Kommunikationseinrichtung (21) zur Ausbildung einer, gegebenenfalls verschlüsselten, drahtlosen Bluetooth- oder WLAN-Verbindung eingerichtet ist.

## Claims

1. Long-range optical device (1), in particular a telescopic sight, comprising crosshairs (6) with adjustable positioning and an associated mechanism (7) for adjusting the crosshairs (6), **characterised in that**
- a ring-type or ring-shaped first magnetic element (10), in particular in the form of a ring magnet,
- a rod-type or rod-shaped second magnetic element (11) motion-coupled to the crosshairs (6), in particular in the form of a bar magnet, wherein the second magnetic element (11) is arranged to be movable relative to the first magnetic element (10), wherein in the first and in the second magnetic element (10, 11), one magnetic characteristic, respectively, which can be adjusted in dependency on the relative position between the first and second magnetic element (10, 11), in particular an adjustable magnetic field, can be or is formed,
- a detection device (12) arranged for detecting a change taking place in the magnetic characteristic, which can be or is formed in the first or second magnetic element (10, 11), in each case dependent on the relative position between the first and second magnetic element (10, 11),
- a monitoring device (13), which is arranged for measuring data of the crosshairs to identify the position of the crosshairs (6) based on a magnetic characteristic of the first and second magnetic element (10, 11), being detected by the detection device (12), or based on a detected change in the magnetic characteristic of the first and second magnetic element (10, 11).

2. Long-range optical device according to claim 1, **characterised in that** the detection device (12) comprises a first detection device (12a) attributable or attributed to the first magnetic element (10) and a second detection device (12b) attributable or attributed to the second magnetic element (11), wherein
the first detection device (12a), which is arranged for detecting a change dependent on the relative position between the first magnetic element (10) and the second magnetic element (11), taking place in the magnetic characteristic, which can be or is formed in the first magnetic element (10), and
the second detection device (12b) for detecting a change dependent on the relative position between the first magnetic element (10) and the second magnetic element (11), taking place in the magnetic characteristic, which can be or is formed in the first magnetic element (10)

3. Long-range optical device according to claim 1 or 2, **characterised in that** the monitoring device (13) is arranged to measure angular position data relative to a reference value, which based on the magnetic characteristic of the first and second magnetic element (10) detected by the detection device (12) or based on a change of the same, identifies an angular position of an activation element (9), which is arranged to be rotatable and motion-coupled to the crosshairs (6) and to be activated by an operator for the adjustment of the crosshairs (6), and to include the angular position data in the determination of the position data of the crosshairs.

4. Long-range optical device according to one of the foregoing claims, **characterised in that** the second magnetic element (11) is arranged or formed on or in a component of the mechanism (7), which is arranged to be movable and motion-coupled with the crosshairs (6).

5. Long-range optical device according to claim 4, **characterised in that** the component is a first component forming an adjustment element (23), arranged to be movable in linear direction and forming an setting element (8) for adjusting the crosshairs (6).

6. Long-range optical device according to claim 5, **characterised in that** the adjustment element (23) comprises a shaft-like adjusting section (25) that is movable against the crosshairs (6), wherein the second magnetic element (11) is arranged or formed on or in the adjusting section (25).

7. Long-range optical device according to claim 5 or 6, **characterised in that** an activation element (9) is provided, which is to be activated by an operator for the adjustment of the crosshairs (6), and a transmission element (15) connected with the activation element (9) is provided, forming a second component of the setting element (8) on the device side, which is coupled with the adjustment element (23) to be rotatable in such a manner that the rotations of the transmission element (15) are transferrable or transferred into linear movements of the adjustment element (23) in particular against the crosshairs (6).

8. Long-range optical device according to one of the foregoing claims, **characterised in that** the first magnetic element (10) is arranged or formed on or in one of the adapter element (17) of the long-range optical device (1), which is configured to be non-rotatable and provided for fastening the mechanism (7) on a counter-adapter element of a housing part (5) of the equipment (1).

9. Long-range optical device according to one of the foregoing claims, **characterised in that** an output unit (24), which is arranged for the acoustic and/or optical and/or haptic output of measured position data of the crosshairs and, if applicable, further information.

10. Long-range optical device according to one of the foregoing claims, **characterised in that** on a housing part (5) of the long-range optical device (1), at least one connection unit (18) is arranged or formed through which at least one, in particular electronic functions component (19) that can be coupled with the long-range optical device (1), in particular a target distance measuring device, which can be connected to the long-range optical device (1).

11. Long-range optical device according to one of the foregoing claims, **characterised in that** a communications unit (21), which is arranged for the bidirectional in particular radio-based transmission of data, in particular measured position data of the crosshairs, to at least one external communication partner (22), wherein the communication unit (21) is arranged or formed, in particular, in the or one of the housing parts (5) of the long-range optical device.

12. Long-range optical device according to claim 11, **characterised in that** the communication unit (21) is arranged or formed, in particular, in the or one of the housing parts (5) of the long-range optical device, wherein
the or, if applicable, one of the further communication units (21) is arranged or formed in a housing part separate from the or from one of the housing parts (5) of the long-range optical device (1), wherein at least one connection unit (21) is arranged or formed on the housing part (5) of the long-range optical device (1), through which the or, if applicable, one of the further communication units (21) can be connected to the long-range optical device (1) in particular for data communication.

13. Long-range optical device according to one of the claims 11 to 12, **characterised in that** the communication unit (21) is arranged for establishing a wireless Bluetooth or Wi-Fi connection, which can be encrypted if necessary.

## Revendications

1. Dispositif téléoptique (1), en particulier lunette de visée, comprenant un réticule (6) de position réglable et un dispositif affecté (7) de réglage du réticule (6), **caractérisé par**
- un premier élément magnétique (10) annulaire ou conçu de forme annulaire, en particulier sous la forme d'un aimant annulaire,
- un second élément magnétique (11) au mouvement couplé au réticule (6), en barre ou conçu en forme de barre, en particulier sous la forme d'un barreau aimanté, le second élément magnétique (11) étant disposé de façon mobile par rapport au premier élément magnétique (10), où
dans le premier et dans le second éléments magnétiques (10, 11), respectivement une grandeur caractéristique magnétique variable est ou peut être développée en fonction de la position relative entre le premier et le second éléments magnétiques (10, 11),
- un dispositif de détermination (13) conçu pour déterminer une information de position de réticule décrivant la position du réticule (6) sur la base d'une grandeur caractéristique magnétique du premier et/ou du second élément magnétique (10, 11) déterminée par le dispositif de détermination (12) ou sur la base d'une modification de la grandeur caractéristique magnétique du premier et/ou du second élément magnétique (10, 11) déterminée par le dispositif de détermination (12).

2. Dispositif téléoptique selon la revendication 1, **caractérisé en ce que** le dispositif de détermination (12) comprend un premier élément de détermination (12a) affecté ou pouvant être affecté au premier élément magnétique (10) ainsi qu'un second élément de détermination (12b) affecté ou pouvant être affecté au second élément magnétique (11), où
le premier élément de détermination (12a) est conçu pour déterminer une modification de la grandeur caractéristique magnétique déterminée ou pouvant être déterminée dans le premier élément magnétique (10) ayant lieu en fonction de la position relative entre le premier élément magnétique (10) et le second élément magnétique (11), et
le second élément de détermination (12b) est conçu pour déterminer une modification de la grandeur caractéristique magnétique déterminée ou pouvant être déterminée dans le second élément magnétique (11) ayant lieu en fonction de la position relative entre le premier élément magnétique (10) et le second élément magnétique (11).

3. Dispositif téléoptique selon la revendication 1 ou 2, **caractérisé en ce que** le dispositif de détermination (13) est conçu pour déterminer, sur la base de la grandeur caractéristique magnétique du premier élément magnétique (10) déterminée par le dispositif de détermination (12) ou d'une modification de celle-ci, une information de position angulaire qui décrit la position angulaire rapportée à une valeur de référence d'un élément d'actionnement (9) rotatif couplé au réticule (6), qu'un utilisateur doit actionner pour régler le réticule (6), et pour incorporer l'information de position angulaire dans la détermination de l'information de position de réticule.

4. Dispositif téléoptique selon l'une des revendications précédentes, **caractérisé en ce que** le second élément magnétique (11) est disposé ou conçu sur ou dans un élément de construction du dispositif (7) mobile au mouvement couplé au réticule (6).

5. Dispositif téléoptique selon la revendication 4, **caractérisé en ce que** l'élément de construction est un élément de réglage (23) linéairement mobile, formant un premier composant d'un dispositif d'actionnement (8) du côté du dispositif, mis en place pour régler le réticule (6).

6. Dispositif téléoptique selon la revendication 4, **caractérisé en ce que** l'élément de réglage (23) comprend une pièce de réglage (25) mobile de type tige contre le réticule (6), le second élément magnétique (11) étant disposé ou conçu sur ou dans la pièce de réglage (25).

7. Dispositif téléoptique selon la revendication 5 ou 6, **caractérisé par** un élément d'actionnement (9) rotatif qu'un utilisateur doit actionner pour régler le réticule (6) et par un élément de transfert (15) rotatif lié solidairement en rotation avec l'élément d'actionnement (9) formant un second composant du dispositif d'actionnement (8), l'élément de transfert (15) étant couplé à l'élément de réglage (23) de sorte que des mouvements de rotation de l'élément de transfert (15) sont ou peuvent être converti en mouvements linéaires de l'élément de réglage (23), en particulier contre le réticule (6).

8. Dispositif téléoptique selon l'une des revendications précédentes, **caractérisé en ce que** le premier élément magnétique (10) est disposé ou conçu sur ou dans un élément adaptateur (17) rotatif du dispositif téléoptique (1) mis en place pour fixer le dispositif (7) sur un contre-élément adaptateur d'un élément de carter (5) du dispositif (1).

9. Dispositif téléoptique selon l'une des revendications précédentes, **caractérisé par** un dispositif de sortie (24) mis en place pour la sortie acoustique et/ou optique et/ou tactile d'une information de position de réticule déterminée, ainsi éventuellement que d'autres informations.

10. Dispositif téléoptique selon l'une des revendications précédentes, **caractérisé en ce qu'au** moins un dispositif de raccordement (18) est disposé ou conçu sur un élément de carter (5) du dispositif téléoptique (1), par lequel on peut raccorder au dispositif téléoptique (1) au moins un composant fonctionnel (19), en particulier électronique, couplable avec le dispositif téléoptique (1), en particulier un dispositif de mesure de distance de cible.

11. Dispositif téléoptique selon l'une des revendications précédentes, **caractérisé par** un dispositif de communication (21) mis en place pour la transmission bidirectionnelle, en particulier radio, de données, en particulier d'une information de position de réticule déterminée, à au moins un partenaire de communication externe (22), le dispositif de communication (21) étant disposé ou conçu en particulier dans le ou un élément de carter (5) du dispositif téléoptique (1).

12. Dispositif téléoptique selon la revendication 11, **caractérisé en ce que** le dispositif de communication (21) est disposé ou conçu en particulier dans le ou un élément de carter (5) du dispositif téléoptique (1),
le ou un, éventuellement autre, dispositif de communication (21) étant disposé ou conçu dans un élément de carter séparé du ou d'un élément de carter (5) du dispositif téléoptique (1), au moins un dispositif de raccordement (21) étant disposé ou conçu sur l'élément de carter (5) du dispositif téléoptique (1), par lequel le ou un, éventuellement autre, dispositif de communication (21), peut être connecté au dispositif téléoptique (1), en particulier par communication de données.

13. Dispositif téléoptique selon la revendication 11 à 12, **caractérisé en ce que** le dispositif de communication (21) est mis en place pour former une liaison sans fil Bluetooth ou WLAN, éventuellement verrouillée.
